(19) Europäisches Patentamt
European Patent Office
Office européen des brevets

(11)  EP 2 539 870 B1

(12)  **EUROPÄISCHE PATENTSCHRIFT**

(45) Veröffentlichungstag und Bekanntmachung des Hinweises auf die Patenterteilung:
**06.08.2014  Patentblatt 2014/32**

(21) Anmeldenummer: **11718654.4**

(22) Anmeldetag: **07.04.2011**

(51) Int Cl.:
***G06T 11/00*** (2006.01)

(86) Internationale Anmeldenummer:
**PCT/EP2011/001733**

(87) Internationale Veröffentlichungsnummer:
**WO 2011/124379 (13.10.2011 Gazette 2011/41)**

(54) **VERFAHREN ZUR REKONSTRUKTION DER INNEREN STRUKTUR EINES PROBENKÖRPERS MITTELS REFLEXIONS- UND STREUSIGNALEN**

METHOD FOR RECONSTRUCTING THE INTERNAL STRUCTURE OF A SAMPLE BODY BY MEANS OF REFLECTION AND SCATTERING SIGNALS

PROCÉDÉ DE RECONSTRUCTION DE LA STRUCTURE INTERNE D'UN ÉCHANTILLON D'ESSAI AU MOYEN DE SIGNAUX RÉFLÉCHIS ET DIFFUSÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2010  DE 102010014166**

(43) Veröffentlichungstag der Anmeldung:
**02.01.2013  Patentblatt 2013/01**

(73) Patentinhaber: **Karlsruher Institut für Technologie 76131 Karlsruhe (DE)**

(72) Erfinder:
 • **STOTZKA, Rainer**
  **76351 Linkenheim (DE)**
 • **RUITER, Nicole**
  **76448 Durmersheim (DE)**

(74) Vertreter: **Müller-Boré & Partner Patentanwälte PartG mbB**
 **Friedenheimer Brücke 21**
 **80639 München (DE)**

(56) Entgegenhaltungen:
 • **JIRIK R ET AL: "3D regularized speed-map reconstruction in ultrasound transmission tomography", ULTRASONICS SYMPOSIUM (IUS), 2009 IEEE INTERNATIONAL, IEEE, PISCATAWAY, NJ, USA, 20. September 2009 (2009-09-20), Seiten 2272-2275, XP031654477, ISBN: 978-1-4244-4389-5**
 • **CUIPING LI ET AL: "Breast ultrasound tomography with total-variation regularization", PROCEEDINGS OF SPIE, 1. Januar 2009 (2009-01-01), Seiten 726506-726506-8, XP55031262, DOI: 10.1117/12.811044**
 • **LI C ET AL: "An improved automatic time-of-flight picker for medical ultrasound tomography", ULTRASONICS, IPC SCIENCE AND TECHNOLOGY PRESS LTD. GUILDFORD, GB, Bd. 49, Nr. 1, 1. Januar 2009 (2009-01-01), Seiten 61-72, XP025715107, ISSN: 0041-624X, DOI: 10.1016/J.ULTRAS.2008.05.005**

EP 2 539 870 B1

**Beschreibung**

Die Erfindung betrifft ein Verfahren und eine Vorrichtung zur Bestimmung der inneren Struktur eines Probenkörpers mittels Reflexionssignalen bzw. Streusignalen. Insbesondere betrifft die Erfindung die Rekonstruktion der räumlichen Verteilung eines Reflexionskoeffizienten für Wellen in einem Probenkörper.

Es ist eine Vielzahl von bildgebenden Verfahren zur Bestimmung der inneren Struktur von Probenkörpern bekannt. Diese bildgebenden Verfahren basieren auf physikalischen Meßverfahren, bei denen eine physikalische Interaktion eines Anregungssignals mit der inneren Struktur des Probenkörpers zu meßbaren Daten führt. Beispielsweise können wellenmechanische Interaktionen, wie beispielsweise Reflexionen bzw. Streuungen, des Probenkörpers mit zumindest einer anregenden Welle gemessen werden. Die wellenmechanische Interaktion des Probenkörpers wird dabei im wesentlichen von einer heterogenen Verteilung der Wellenausbreitungseigenschaft des Probenkörpers, wie zum Beispiel der Wellenausbreitungsgeschwindigkeit, der Impedanz oder der Dämpfung, beeinflußt. Als anregende Welle können sowohl mechanische Wellen, wie zum Beispiel Kompressionswellen, Scherwellen, Schallwellen oder Ultraschallwellen, sowie elektromagnetische Wellen, wie zum Beispiel Lichtwellen, Radarwellen, Mikrowellen oder Röntgenstrahlen, verwendet werden. Die Bestimmung der inneren Struktur ist unter der Annahme erfolgreich, daß die räumliche Verteilung des Reflexionskoeffizienten mit der gesuchten räumlichen Struktur korreliert.

Zur Bestimmung einer zweidimensionalen oder dreidimensionalen Struktur des Inneren des Probenkörpers ist in der Regel die Erfassung einer Vielzahl von Meßreihen mit unterschiedlichen Meßkonfigurationen notwendig, wobei die anregende Welle bei jeder der Meßkonfigurationen einen anderen Weg durch das Innere des Probenkörpers nimmt. Die Durchführung eines bildgebenden Verfahrens aufgrund der gewonnenen Meßreihen umfaßt in der Regel die Lösung eines inversen Problems, welches in der Regel näherungsweise mit Methoden der linearen Algebra gelöst wird. Die Güte der Lösung hängt dabei im allgemeinen von der Menge und der Qualität der gewonnenen Meßreihen ab sowie der Art und der Richtigkeit weiterer Randbedingungen, welche zur Stabilisierung des näherungsweisen Lösungsverfahrens aufgestellt wurden.

Beispielsweise können die Randbedingungen die Eigenschaften des durch das Bildgebungsverfahren erhaltenen Bildes der Struktur des Probenkörpers festlegen. Beispielsweise ist es üblich, gemäß dem Prinzip von Occam die innere Struktur des Probenkörpers als möglichst glatt anzunehmen. Diese Annahme hat den Nachteil, daß diskrete, scharf begrenzte Strukturen innerhalb des Probenkörpers durch das bildgebende Verfahren geglättet dargestellt werden, so daß die Rekonstruktion der inneren Struktur des Probenkörpers nicht zu einer scharfen diskreten inneren Struktur führt, sondern zu einer ausgedehnten glatten Struktur.

Weiter ist es in der Regel notwendig, die gewonnenen Meßreihen zur Durchführung der bildgebenden Verfahren aufzubereiten, beispielsweise die Laufzeiten von Ultraschallwellen durch den Probenkörper zu bestimmen. Es versteht sich, daß bei der Bestimmung von Laufzeiten anhand aufgenommener Meßreihen Fehler auftreten können, welche während des bildgebenden Verfahrens die Lösung des inversen Problems destabilisieren können und im weiteren nur schwer oder gar nicht berücksichtigbar sind.

Beispielsweise offenbart JIRIK R ET AL: "3D regularized speed-map reconstruction in ultrasound transmission tomography", ULTRASONICS SYMPOSIUM (IUS), 2009 IEEE INTERNATIONAL, IEEE, PISCATAWAY, NJ, USA, 20. September 2009 (2009-09-20), Seiten 2272-2275, XP031654477, ISBN: 978-1-4244-4389-5 ein Rekonstruktionsverfahren für die Ultraschall Transmissions-Tomografie bei welchem eine Vorwärtsmodellierung mittels einer Übertragungsmatrix erfolgt. Die Matrixelemente beinhalten den Laufzeit-Beitrag eines gegebenen Voxels zur gesamten Signallaufzeit längs eines Laufpfades zwischen Emitter und Empfänger. Die Signallaufzeit muss für jeden Laufpfad mittels Korrelation des gemessenen RF-Signals mit einem Standard- Wassersignal ermittelt werden.

Es ist Aufgabe der Erfindung, ein Verfahren sowie eine Vorrichtung bereitzustellen, welches bzw. welche die Rekonstruktion der räumlichen Verteilung eines Reflexionskoeffizienten für Wellen in einem Probenkörper ermöglicht, wobei die räumliche Ausdehnung der inneren Struktur des Probenkörpers möglichst scharf begrenzt dargestellt werden soll und wobei die Auswertung der fehlerbehafteten Meßreihen möglichst einfach durchgeführt werden soll.

Die Aufgabe wird durch die Gegenstände der unabhängigen Ansprüche gelöst. Bevorzugte Ausführungsformen sind Bestandteil der Unteransprüche.

Verfahren gemäß einem Aspekt

Ein Aspekt der Erfindung betrifft ein Verfahren zur computergestützten Rekonstruktion der räumlichen Verteilung von Reflexionskoeffizienten für Wellen in einem Probenkörper umfassend die folgenden Schritte:

- Parametrisieren des Probenkörpers durch N Volumenelemente;
- Bestimmen von M verschiedenen Meßkonfigurationen einer Abstrahleinrichtung für Wellen und einer zugeordneten Empfangseinrichtung für Wellen;
- Festlegen der Anzahl T der Meßpunkte, welche von der Empfangseinrichtung während einer zu registrierenden

Meßreihe $x^{[i]}_t$ mit $t \in [1, 2, ..., T]$ in der i-ten Meßkonfiguration mit $i \in [1, 2, ..., M]$ registriert werden, wobei die t-te Messung zu einem Zeitpunkt $\tau(t)$ erfolgt;

- Erstellen von M Laufwegematrizen $\underline{\underline{G}}^{[i]}$, wobei in der i-ten Laufwegematrix $\underline{\underline{G}}^{[i]}$ die möglichen Laufwege von reflektierten und/oder gestreuten Wellen durch die N Volumenelemente des Probenkörpers von der Abstrahleinrichtung zu der zugeordneten Empfangseinrichtung gemäß der i-ten Meßkonfiguration mit $i \in [1, 2, ..., M]$ und eine zu jedem Laufweg zugeordnete Laufzeit $\tau(t)$ der Welle durch den Probenkörper codiert sind;

- Registrieren von M Meßreihen gemäß der M verschiedenen Meßkonfigurationen, wobei der Abstrahleinrichtung bei der i-ten Meßreihe ein Anregungssignal $\underline{a}^{[i]}$ zugeführt wird und die zugeordnete Empfangseinrichtung eine Meßreihe $\underline{x}^{[i]}$ registriert;

- Zusammenfügen der M Meßreihen zu einem einzigen Meßvektor $\underline{x} = (\underline{x}^{[1]}, \underline{x}^{[2]} ... \underline{x}^{[M]})^T$;

- Zusammenfügen der M Laufwegematrizen $\underline{\underline{G}}^{[i]}$ zu einer einzigen Laufwegematrix $\underline{\underline{G}} = (\underline{\underline{G}}^{[1]\,T}, \underline{\underline{G}}^{[2]\,T} ... \underline{\underline{G}}^{[M]\,T})^T$;

- Initialisieren von N Reflexionskoeffizienten $s^{[n=1]}_j$ mit $j \in [1, 2, ..., N]$ eines Reflexionskoeffizientenvektors $\underline{s}^{[n]}$ mit initialen Schätzwerten, wobei jeder Reflexionskoeffizient $s^{[n]}_j$ dem j-ten Volumenelement der N Volumenelemente zugeordnet ist und innerhalb des zugeordneten Volumenelements konstant ist;

- Berechnen eines Vorhersagedifferenzvektors $\Delta\underline{x} = \underline{x} - \underline{\underline{G}} \cdot \underline{s}^{[n]}$, welcher die Abweichung zwischen den Elementen der M registrierten Meßreihen $x^{[i]}_t$ und den vorhersagbaren Meßreihen $G^{[i]}_{tj} \cdot s^{[n]}_j$ enthält;

- Minimieren einer Norm des Vorhersagedifferenzvektors $\|\Delta\underline{x}\|$; und

- Bereitstellen der Reflexionskoeffizienten $\underline{s}^{[n]}$.

In der vorliegenden Anmeldung werden Matrizen durch eine doppelte Unterstreichung, beispielsweise $\underline{\underline{G}}$, und Vektoren durch eine einfache Unterstreichung, beispielsweise $\underline{x}$, gekennzeichnet. Vektoren werden als Spaltenvektor angenommen. Es versteht sich jedoch, daß die Vektoren nach Transponieren der Gleichungen auch Zeilenvektoren sein können.

Die Anzahlen N, M und T sind jeweils natürliche Zahlen größer als Null. Insbesondere kann der Probenkörper durch N = 1, 2, 3, 4, ..., 32, ..., 64, ..., 128, ..., 256, ..., 500, ..., 512, ..., 1000, ..., 1024, ..., 2048, ... 4096, ..., 5000 usw. Volumenelemente parametrisiert sein. Bevorzugt können M=1, 2, 3, 4, 5, 6, 7, 8, 9, 10, ...20, ... 30, ..., 64, ...128, usw. Meßreihen registriert werden, um die Rekonstruktion durchzuführen. Dabei können die Meßreihen jeweils T = 1, 2, 3, 4, ..., 16, ..., 32, ..., 64, ..., 128, ..., 256, ..., 512, ..., 1024, ..., 2048, ..., 4096, usw. einzelne Meßwerte umfassen. Insbesondere kann die Anzahl der Meßwerte anhand der maximalen Laufzeit der Welle und der maximalen Frequenz der Welle berechnet werden, so daß die Welle registriert wird, d.h. von der Empfangseinrichtung erfaßt bzw. gemessen wird, und der Kehrwert des Abtastintervalls größer ist als die Nyquist-Frequenz der Welle, also beispielsweise $1/(2\tau(T))$ größer ist als die maximale in der Welle enthaltene Frequenz.

Unter der Annahme, daß die Verteilung der Reflexionskoeffizienten $\underline{s}$ spärlich ist, d.h. daß der Reflexionskoeffizientenvektor s spärlich besetzt ist oder daß die Varianz des Reflexionskoeffizientenvektors $\underline{s}$ spärlich besetzt ist, kann die Anforderung des Nyquist-Theorems bezüglich des minimalen Abtastintervalls verletzt sein, wobei dennoch eine Rekonstruktion des Reflexionskoeffizientenvektors $\underline{s}$ möglich ist. In diesem Fall steht das Verfahren in Gegensatz zu der dem Fachmann geläufigen technischen Lehre, daß zur digitalen Registrierung von Wellen und bei computergestützten Rekonstruktionen die Randbedingung des Nyquist-Theorems eingehalten werden muß, das heißt, daß das Abtastintervall zur digitalen Erfassung einer Wellen zumindest kleiner ist als die Hälfte der kürzesten Periode der in der zu erfassenden Welle enthaltenen Signale. Mit anderen Worten geht der Fachmann bisher davon aus, daß die Abtastfrequenz mehr als zweimal größer sein muß als die maximale in der zu erfassenden Welle enthaltenen Frequenz, um Alias-Effekte zu verhindern.

Eine Anwendung des erfindungsgemäßen Verfahrens unter der Randbedingungen, daß der Reflexionskoeffizientenvektor $\underline{s}$ spärlich besetzt ist und mit Abtastintervallen, welche das Nyquist-Theorem verletzen haben Überraschenderweise gezeigt, daß zwar wie erwartet die einzelnen Meßreihen keine exakte Beschreibung der tatsächlich an der Empfangseinrichtung auftreffenden Welle ermöglicht jedoch dennoch eine Rekonstruktion der Reflexionskoeffizienten erlaubt. Die Rekonstruktion ist in Abhängigkeit von dem Grad der Spärlichkeit des Reflexionskoeffizientenvektors s auch für unterbestimmte Rekonstruktionsproblem möglich. Mit anderen Worten kann die Anzahl der Volumenelemente N und damit die Länge des Reflexionskoeffizientenvektors $\underline{s}$ größer sein als das Produkt M.T aus der Anzahl der Meßkonfigurationen und der Anzahl der Meßpunkte. Vorteilhafterweise ist es dadurch möglich in die Vorrichtung zur Durchführung des Verfahren mit einfacheren und kostengünstigeren Empfangseinrichtungen auszurüsten. Beispielsweise kann eine Messung mittels elektromagnetischen Wellen im Gigahertz-Bereich, also mittels Zentimeterwellen, durchgeführt werden, wobei die zumindest eine Empfangseinrichtung beispielsweise lediglich zur Registrierung von Wellen im Megahertz-Bereich ausgelegt sein muß, wodurch vorteilhafterweise die Kosten für leistungsfähigere Empfangseinrichtungen eingespart werden können.

Die vorliegende Erfindung hat vorteilhafterweise erkannt, daß auf Grundlage von Meßreihen, welche bei einer Vermessung, insbesondere einer tomographischen Durchschallung oder Durchleuchtung, eines Probenkörpers gewonnen wurden, in einfacher und robuster Weise Bilder der inneren Struktur des Probenkörpers erzeugt bzw. rekonstruiert werden können, wobei vorteilhafterweise scharf begrenzte Strukturen als Ergebnis der Rekonstruktion resultieren und wobei weiter vorteilhafterweise eine aufwendige Aufarbeitung der gewonnenen Meßreihen, insbesondere durch Filterungen, nicht notwendig ist. Dies ist insoweit vorteilhaft, da eine Filterung, insbesondere mit analogen Filtern, beispielsweise Bandpaßfiltern, zu eine Phasenverschiebung von gemessenen Signalen in Abhängigkeit von der Frequenz der Signale erfolgt. Weiter vorteilhafterweise ist eine dreidimensionale Verteilung des Reflexionskoeffizienten und damit der Struktur des Probenkörpers rekonstruierbar, welche beispielsweise unter Verletzung des Shannon'schen Abtasttheorems abgetastet bzw. vermessen wurden.

Der Probenkörper wird durch eine Anzahl von N Volumenelementen parametrisiert, wobei die einzelnen Volumenelemente bezüglich der geometrischen Form und des Volumens zueinander unterschiedlich sein können. Bevorzugt sind die Volumenelemente jedoch regelmäßig angeordnet. Beispielsweise können die Volumenelemente quaderförmig ausgebildet sein, so daß durch die Eckpunkte der Volumenelemente ein orthogonales Gitter in kartesischen Koordinaten aufgespannt wird. Vorteilhafterweise kann ein im wesentlichen quaderförmiger Probenkörper dadurch in einfacher Weise parametrisiert sein. Beispielsweise können die einzelnen Volumenelemente aber auch die Gestalt eines Hohlzylindersegmentes aufweisen, wodurch die Eckpunkte der Volumenelemente ein orthogonales Gitter in Zylinderkoordinaten aufspannen. Vorteilhafterweise kann ein im wesentlichen zylindrischer Probenkörper dadurch in einfacher Weise parametrisiert sein. Vorzugsweise ist der Probenkörper lückenlos parametrisiert, so daß jeder Teil des Probenkörpers durch ein Volumenelement repräsentiert ist. Es versteht sich, daß der Probenkörper auch nur teilweise parametrisiert sein kann, insbesondere wenn nur ein Teil des Probenkörpers, beispielsweise ein zweidimensionaler Schnitt, rekonstruiert werden soll.

Jedem Volumenelement ist ein zu schätzender Reflexionskoeffizient $s_j$ zugeordnet, wobei $j \in [1, 2, ..., N]$ ist. Der Reflexionskoeffizient beschreibt die Änderung der Wellenausbreitungsgeschwindigkeit innerhalb eines Volumenelementes im Vergleich zu den Wellenausbreitungsgeschwindigkeiten der umgebenden Volumenelemente. Der Reflexionskoeffizient kann als Verhältnis der Wellenausbreitungsgeschwindigkeiten $v_0$, $v_j$ wie folgt definiert sein:

$$s_j = \frac{v_j - v_0}{v_j + v_0}. \tag{1}$$

Alternativ kann der Reflexionskoeffizient auch als Verhältnis der Wellenausbreitungsimpedanzen $I_0$, $I_j$ bzw. der Wellenwiderstände wie folgt definiert sein:

$$s_j = \frac{I_j - I_0}{I_j + I_0} = \frac{\rho_j v_j - \rho_0 v_0}{\rho_j v_j + \rho_0 v_0}, \tag{2}$$

wobei $\rho_j$ die Dichte, $v_j$ die Wellenausbreitungsgeschwindigkeit und $I_j$ die Impedanz innerhalb des i-ten Volumenelementes beschreibt. Dementsprechend beschreibt $\rho_0$ die Dichte, $v_0$ die Wellenausbreitungsgeschwindigkeit und $I_0$ die Impedanz des Materials, welches das i-te Volumenelement umgibt. Die obige Definition der Reflexionskoeffizienten gilt für den Einfall einer Wellen im senkrechten Winkel auf die Grenzfläche, welche diesen Reflexionskoeffizienten aufweist. Die Grenzfläche ist dabei mittels der Parametrisierung durch die sich kontaktierenden Begrenzungsflächen zweier Volumenelemente vorgegeben.

Die nachfolgenden Ausführungen basieren auf der Annahme, daß der Probenkörper mittels Kompressionswellen bzw. Schallwellen durchdrungen wird, so daß zur Berechnung der Reflexionskoeffizienten die Kompressionswellen- bzw. Schallwellengeschwindigkeit und gegebenenfalls die Massedichten charakterisierend sind. Es versteht sich, daß zur Rekonstruktion der inneren Struktur des Probenkörpers auch andere Wellen verwendet werden können. Insbesondere können elektromagnetische Wellen verwendet werden, wie beispielsweise Mikrowellen. Dann sind für die Berechnung des Reflexionskoeffizienten die Ausbreitungsgeschwindigkeit bzw. die Impedanzen für Mikrowellen innerhalb des Probenkörpers zu verwenden.

Zur Durchführung des Verfahrens wird weiterhin die Annahme gemacht, daß die relevanten Eigenschaften des Probenkörpers innerhalb jedes Volumenelementes konstant sind. Weiterhin wird bevorzugt angenommen, daß die im Probenkörper auftretende Wellenausbreitung zumindest bereichsweise durch ebene Wellen und mittels Strahlengeometrie approximiert werden kann. Weiter bevorzugt wird unterstellt, daß ein Strahl jeweils parallel zu einer Kante des Volumenelements orientiert ist, welches er durchläuft.

Um im Inneren des Probenkörpers eine hinreichende Überdeckung mit Strahlenwegen zu erreichen, die eine erfolgreiche Rekonstruktion der inneren Struktur des Probenkörpers ermöglicht, werden M verschiedene Meßkonfigurationen bestimmt, welche jeweils durch eine bestimmte geometrische Position der Abstrahleinrichtung und der Empfangseinrichtung ausgezeichnet ist. Das Bestimmen der Meßkonfigurationen kann ein Festlegen oder ein Abschätzen aufgrund weiterer geometrischer Überlegung umfassen, beispielsweise ein Abschätzen aufgrund einer minimalen räumlichen Überdeckung oder ein Festlegen in Abhängigkeit einer maximal zur Verfügung stehenden Meßzeit, eines maximalen verarbeitbaren Datenvolumens oder einer maximalen Speichergröße. Durch die Position der aktiven Abstrahleinrichtung und der aktiven Empfangseinrichtung ist der Laufweg der Welle durch den Probenkörper im wesentlichen vorbestimmt, wobei die aufgrund der inneren Struktur auftretenden Abweichungen von diesem vorbestimmten Laufweg bevorzugt im Rahmen der Rekonstruktion vernachlässigt werden. Es versteht sich, daß mehrere verschieden positionierte Abstrahleinrichtungen verwendet werden können, um jeweils eine Welle von verschiedenen Positionen gemäß der zugeordneten Meßkonfiguration abzustrahlen. Alternativ kann auch eine einzige Abstrahleinrichtung, die nacheinander an verschiedenen Positionen angeordnet ist, verwendet werden, um jeweils eine Welle von verschiedenen Positionen gemäß der zugeordneten Meßkonfiguration abzustrahlen. Analog können mehrere verschieden angeordnete Empfangseinrichtungen oder eine einzige verlagerbare Empfangseinrichtung verwendet werden.

Die Abstrahleinrichtung kann dabei eine Einrichtung zur Erzeugung mechanischer Wellen sein, beispielsweise ein Piezokristall, ein Lautsprecher, eine Vibrationsquelle, eine Ultraschallquelle usw.. Weiter kann die Abstrahleinrichtung eine Einrichtung zum Abstrahlen elektromagnetischer Wellen sein, beispielsweise eine Antenne, eine Röntgenröhre usw.

Für jeden dieser Laufwege gemäß einer der M verschiedenen Meßkonfigurationen wird eine Laufwegematrix $\underline{G}^{[i]}$ erstellt, welche die Größe T mal N aufweist, wobei T die Anzahl der von der Empfangseinrichtung registrierten Meßpunkte ist und N die Anzahl der Volumenelemente. Mit anderen Worten ist die zeitliche Dauer der Registrierung $\tau(T)$ an der Empfangseinrichtung gleich T mal einem Abtastintervall $\Delta\tau$, also der Zeitdifferenz zwischen zwei Meßpunkten, beispielsweise $\Delta\tau = \tau(T)\text{-}\tau(T\text{-}1)$ oder $\Delta\tau = \tau(2)\text{-}\tau(1)$.

Die Laufwegematrix $\underline{G}^{[i]}$ ist dabei spärlich besetzt, das heißt, daß die einzelnen Elemente $G^{[i]}_{tj}$ mit $t \in [1, 2, ..., T]$ und $j \in [1, 2, ..., N]$ gleich Null sind mit Ausnahme der M Elemente, welche jeweils den Laufweg eines reflektierten oder gestreuten Strahl bzw. einer Welle durch die N Volumenelemente des Probenkörpers von der Abstrahleinrichtung zu der zugeordneten Empfangseinrichtung gemäß der i-ten Meßkonfiguration charakterisieren, wenn eine Reflexion des Strahls bzw. der Welle an einem der Volumenelemente auftritt. Eine Reflexion bzw. Streuung an dem j-ten Volumenelement wird in der Laufwegematrix $\underline{G}^{[i]}$ dadurch codiert, daß in der j-ten Spalte der Laufwegematrix in einer Spalte t der Wert "1" bzw. ein Wert ungleich Null gesetzt wird, wobei die tatsächliche Laufzeit $\tau_S$ des reflektierten Strahls bzw. der reflektierten Welle durch den Probenkörper näherungsweise der Zeit $\tau(t)$ entspricht, d.h. daß $|\tau_S\text{-}\tau(t)|$ = minimal ist. Die Spalte t ist abhängig von der Distanz, welche der Strahl auf dem Weg von der Abstrahleinrichtung zur Empfangseinrichtung zurücklegt. Die genäherte Laufzeit $\tau(t)$ kann dann durch Dividieren der Distanz durch eine angenommene oder eine mittlere oder eine wahre Ausbreitungsgeschwindigkeit, mit welcher der Strahl propagiert, ermittelt werden. Insbesondere kann t der Anzahl der Volumenelemente entsprechen, welche auf dem Weg des Strahls bzw. der Welle ausgehend von der Abstrahleinrichtung zu dem j-ten Volumenelement und von dort zu der Empfangseinrichtung durchlaufen werden. Vorteilhafterweise ist dann bei entsprechender Wahl des Abtastintervalls $\Delta\tau$ zur Erstellung der Laufwegematrizen lediglich ein Abzählen der von dem Strahl durchlaufenen Volumenelemente notwendig. Es versteht sich, daß pro Spalte der Laufwegematrix $\underline{G}^{[i]}$ nur ein Element $G^{[i]}_{tj}$ ungleich Null ist, wenn eine Mehrfachreflexion nicht zugelassen ist. Somit ist jede Laufwegematrix $\underline{G}^{[i]}$ nur N-spärlich besetzt.

Bei der Aufnahme der M Meßreihen wird der Abstrahleinrichtung bei der Durchführung der i-ten Meßreihe ein Anregungssignal $\underline{a}^{[i]}$ zugeführt. Das Anregungssignal kann bevorzugt eine einzelne Sinus-Schwingung, eine einzelne Sinus-Halbschwingung, ein Wavelet, ein Sweep oder ein Impuls sein. In Antwort auf das Anregungssignal $\underline{a}^{[i]}$ wird an der zugeordneten Empfangseinrichtung eine Meßreihe $\underline{x}^{[i]}$ registriert. Unter der Annahme, daß der Probenkörper als lineares System betrachtet werden kann, also insbesondere unter der Annahme, daß bei der Untersuchung mittels Kompressionswellen lediglich elastische Deformation auftritt und bei der Untersuchung mittels elektromagnetischer Wellen die Dämpfung vernachlässigt werden kann, entspricht die Meßreihe der Konvolution der Impulsantwortfunktion (also im wesentlichen die Struktur) des Probenkörpers mit dem Anregungssignal. Vorteilhafterweise ist die Dekonvolution, also die Rekonstruktion der inneren Struktur des Probenkörpers somit mittels einer linearen oder zumindest linearisierten Algebra zumindest näherungsweise möglich.

Die Ergebnisse aller M Meßreihen $\underline{x}^{[i]}$ werden zu einem Meßvektor, dem Spaltenvektor $\underline{x}$ mit der maximalen Länge M.T zusammengefaßt. Das Zusammenfügen kann durch die Operation $\underline{x} = (\underline{x}^{[1]}, \underline{x}^{[2]} ...\underline{x}^{[M]})^T$ beschrieben werden, wobei der Operator $(...)^T$ die Transponierte der Matrix darstellt. Weiter werden die einzelnen Laufwegematrizen $\underline{G}^{[i]}$ zu einer Laufwegematrix $\underline{G}$ zusammengefaßt, welche maximal die Dimension M.T mal N aufweist. Das Zusammenfügen der Laufwegematrizen kann durch die Operation $\underline{G} = (\underline{G}^{[1]\,T}, \underline{G}^{[2]\,T} ... \underline{G}^{[M]\,T})^T$ beschrieben werden. Vorteilhafterweise kann durch das Zusammenfügen die Rekonstruktion auf Grundlage aller Meßreihen gleichzeitig durchgeführt werden. Bevorzugt können alle Elemente j des Meßvektors $\underline{x}$ und alle Zeilen j der Laufwegematrix $\underline{G}$ gelöscht bzw. gestrichen werden, wenn das Element j des Meßvektors $\underline{x}$ und alle Elemente in der Zeile j der Laufwegematrix $\underline{G}$ gleich Null sind. Dadurch kann das zur Rekonstruktion zu lösende Gleichungssystem vorteilhafterweise verkleinert werden.

Die Rekonstruktion erfolgt durch die Annahme, daß eine vorgegebene räumliche Verteilung von Reflexionskoeffizienten s der tatsächlichen inneren Struktur des Probenkörpers hinreichend nahe kommt, wenn mittels der vorgegebenen Reflexionskoeffizienten s alle tatsächlich gemessenen Meßreihen $\underline{x}$ hinreichend genau vorhergesagt bzw. erklärt werden können. Zu Beginn der Rekonstruktion werden die Reflexionskoeffizienten mit initialen Schätzwerten belegt. Bevorzugt werden als erste Schätzung alle Reflexionskoeffizienten $s_j$ gleich Null gesetzt, was einem homogenen Probenkörper entspricht. Weiter bevorzugt können bereits bekannte oder vermutete Störkörper dadurch berücksichtigt werden, daß den Volumenelementen, welche einen bekannten oder vermuteten Störkörper repräsentieren, ein Reflexionskoeffizient ungleich Null zugeordnet wird.

Der Vorhersagedifferenzvektor $\Delta\underline{x} = \underline{x} - \underline{G}\cdot\underline{s}$ enthält die Differenz zwischen den zusammengefaßten registrierten Meßreihen $\underline{x}$ bzw. des Meßvektors $\underline{x}$ und den vorhergesagten Meßreihen $\underline{G}\cdot\underline{s}$. Eine hinreichend genaue Rekonstruktion der in dem Vektor $\underline{s}$ enthaltenen inneren Struktur des Probenkörpers bedingt zum einen eine Minimierung dieser Differenz. Ein Kriterium einer hinreichend genauen Rekonstruktion ist daher der Abstand zwischen den anhand der geschätzten Reflexionskoeffizienten s vorhergesagten Meßreihen $\underline{G}\cdot\underline{s}$ und den tatsächlich gemessenen Meßreihen $\underline{x}$, also die Norm des Vorhersagedifferenzvektors $\|\Delta\underline{x}\|_p$.

Bevorzugt umfaßt das Minimieren der Norm des Vorhersagedifferenzvektors das Minimieren der Lp-Norm des Vorhersagedifferenzvektors $\|\Delta\underline{x}\|_p$ mit $0 < p \leq 2$. Weiter bevorzugt wird dabei die Lq-Norm des Vektors der geschätzten Reflexionskoeffizienten $\|\underline{s}^{[n]}\|_q$ minimiert wird, wobei gilt $0 < q \leq 1$. Alternativ kann auch die totale Varianz $\|\sigma(\underline{s}^{[n]})\|_q$ des Vektors der geschätzten Reflexionskoeffizienten minimiert werden. Mit anderen Worten kann die erste Ableitung des Vektors der geschätzten Reflexionskoeffizienten $\underline{s}^{[n]}$ minimiert werden, so daß eine möglichst bereichsweise konstante Verteilung der geschätzten Reflexionskoeffizienten $\underline{s}^{[n]}$ resultiert. Weiter kann auch statt der ersten Ableitung die zweite Ableitung zur Minimierung gewählt werden, so daß eine möglichst glatte Verteilung der geschätzten Reflexionskoeffizienten $\underline{s}^{[n]}$ resultiert. In der weiteren Beschreibung wird davon ausgegangen, daß die Norm der Reflexionskoeffizienten an sich minimiert wird, um die Anzahl der streuenden Volumenelemente zu minimieren. Im Lichte des zuvor Gesagten, sind jedoch auch die Möglichkeiten mitzulesen, daß die erste oder zweite Ableitung minimiert wird.

Um die Rekonstruktion durchzuführen, wird die $L_p$-Norm des Vorhersagedifferenzvektors $\|\Delta\underline{x}\|_p$ unter der Bedingung $0 < p \leq 2$ minimiert, wobei diese Minimierung unter der Randbedingung erfolgt, daß die $L_q$-Norm des Vektors der geschätzten Reflexionskoeffizienten $\|\underline{s}\|_q$ (oder dessen erste oder zweite Ableitung, wie oben ausgeführt) ebenfalls minimiert wird, wobei gilt $0 < q \leq 1$. Dabei wird der aus der Minimierung resultierende Vektor der Reflexionskoeffizienten um so spärlicher besetzt sein je kleiner q ist. Vorteilhafterweise ergibt eine spärliche Besetzung des resultierenden Vektors $\underline{s}$ der Reflexionskoeffizienten eine strukturell einfache, rekonstruierte räumliche Verteilung des Reflexionskoeffizienten und damit der inneren Struktur des Probenkörpers. Dadurch ergibt sich vorteilhafterweise ein einfaches und scharfes begrenztes Bild der inneren Struktur des Probenkörpers. Dabei ist es möglich mit der erhaltenen rekonstruierten inneren Struktur des Probenkörpers mit möglichst wenigen reflektierenden bzw. streuenden Strukturen die gemessenen Meßreihen zu erklären.

Das Bereitstellen der Reflexionskoeffizienten $\underline{s}^{[n]}$ kann insbesondere die Ausgabe der Reflexionskoeffizienten mittels einer Ausgabeeinrichtung, einer Anzeigeeinrichtung und/oder einer Speichereinrichtung umfassen. Bevorzugt können die Reflexionskoeffizienten in Abhängigkeit von der räumlichen Position der zugeordneten Volumenelemente bildhaft dargestellt werden.

Bevorzugte Ausführungsformen des Verfahrens

Vorzugsweise wird der Reflexionskoeffizientenvektor $\underline{s}$ bzw. der Vektor der Reflexionskoeffizienten $s_j$ derart minimiert, daß $\underline{s}$ spärlich besetzt ist, wobei die Anzahl k der von Null verschiedenen Elemente vorbestimmbar ist. Insbesondere können alle Elemente des Vektors $\underline{s}$ gleich Null gesetzt werden, die einen bestimmten Schwellwert unterschreiten bzw. bei negativen Werten von $\underline{s}$ überschreiten. Bevorzugt können alle Elemente des Vektors s gleich Null gesetzt werden, bis auf die k Elemente, welche die betragsmäßig größten Werte aufweisen. Weiter bevorzugt kann durch Verkleinern des Wertes q eine spärlichere Besetzung des Vektors der geschätzten Reflexionskoeffizienten s erreicht werden.

Vorzugsweise erfolgt das Minimieren der Norm $\|\Delta x\|_p$ iterativ, wobei das iterative Minimieren die folgenden Schritte umfaßt:

-- Berechnen des Vorhersagedifferenzvektors $\Delta\underline{x} = \underline{x} - \underline{G}\cdot\underline{s}^{[n]}$ für die n-te Iteration;
-- Berechnen eines Aufdatierungsvektors $\Delta\underline{s}$;
-- Berechnen neuer Reflexionskoeffizienten $s^{[n+1]}_j = s^{[n]}_j + \Delta s_j$.

Die einzelnen Elemente des Vorhersagedifferenzvektors der n-te Iteration für die i-te Meßkonfiguration ergeben sich zu $\Delta x^{[i]}_t = x^{[i]}_t - G^{[i]}_{tj}\cdot s^{[n]}_j$. Der Vorhersagedifferenzvektor $\Delta\underline{x}$ umfaßt die Differenzen aller Meßkonfigurationen, so daß die Minimierung der Differenz gleichzeitig für und unter Berücksichtigung aller M Meßreihen erfolgen kann.

Das Berechnen des Aufdatierungsvektors $\Delta\underline{s}$, also der aus der Differenz zwischen gemessenen und vorhergesagten Meßreihen resultierende Änderung in den Reflexionskoeffizienten, kann auf unterschiedlichen Wegen erfolgen. Beispielsweise kann lediglich ein Element $s^{[n]}_j$ geändert werden, wobei bevorzugt das Element gewählt wird, welches den größten Effekt in der Minimierung der Norm $\| \Delta x \|_p$ bewirkt. Weiter kann der Aufdatierungsvektor $\Delta \underline{s}$ durch eine Gauß-Lösung bestimmt werden, wobei für $\Delta s$ gilt:

$$\Delta \underline{s} = (\underline{G}^T \underline{G})^{-1} \underline{G}^T \, \Delta \underline{x}, \tag{3}$$

wobei die Operation $(\dots)^{-1}$ die Matrixinverse bezeichnet. Eine unterbestimmte zu invertierende Matrix $\underline{G}^T \underline{G}$ kann mit Hilfe der Pseudo-Inversen bzw. Penrose-Inversen oder mit Hilfe des Marquardt-Verfahrens gelöst werden. Mit Hilfe des Aufdatierungsvektor $\Delta s$ werden dann neue Reflexionskoeffizienten für die nachfolgende Iteration zu $s^{[n+1]}_j = s^{[n]}_j + \Delta s_j$ berechnet.

Vorzugsweise umfaßt das Verfahren zum iterativen Minimieren des Abstandes $\| \Delta x \|_p$ den Schritt des Umwandelns des Aufdatierungsvektor $\Delta \underline{s}$ in einen 2k-spärlich besetzten Aufdatierungsvektor. Dabei werden alle Elemente des Vektors $\Delta \underline{s}$ gleich Null gesetzt, bis auf die 2k Elemente, welche die betragsmäßig größten Änderungen aufweisen. Vorteilhafterweise werden somit lediglich die am stärksten bei der Minimierung wirkenden Strukturen der inneren Struktur des Probenkörpers bei der Rekonstruktion berücksichtigt.

Vorzugsweise umfaßt das Verfahren zum iterativen Minimieren des Abstandes $\| \Delta x \|_p$ den Schritt des Umwandelns des neu berechneten Reflexionskoeffizientenvektors $\underline{s}^{[n+1]}$ in einen k-spärlich besetzten Vektor. Dabei werden alle Elemente des Vektors $\underline{s}$ gleich Null gesetzt, bis auf die k Elemente, welche die betragsmäßig größten Werte aufweisen. Vorteilhafterweise werden somit lediglich die am stärksten ausgeprägten Strukturen der inneren Struktur des Probenkörpers bei der Rekonstruktion berücksichtigt.

Vorzugsweise gilt p gleich 2, so daß das Minimieren der Norm $\| \Delta x \|_p$ mittels der $L_2$-Norm erfolgt. Vorteilhafterweise erfolgt eine besonders genaue Anpassung der Meßreihen durch die $L_2$-Norm. Weiter bevorzugt kann p gleich 1 sein, da durch die Verwendung der $L_1$-Norm vorteilhafterweise der Einfluß von Ausreißern bei der Erfassung der Meßreihen verringert wird.

Vorzugsweise gilt q gleich 1, so daß das Minimieren des Abstandes $\| \Delta s \|_q$ mittels der $L_1$-Norm erfolgt. Vorteilhafterweise ist das Minimieren mittels der $L_1$-Norm ein konvexes Optimierungsproblem, welches insbesondere für einen k-spärlich besetzten Vektor $\underline{s}$ mittels eines linearisierten Ansatzes in $k \cdot \log(M \cdot T)$ Iterationsschritten lösbar ist.

Vorzugsweise umfaßt das Verfahren die folgenden Schritte:

- Bestimmen von T Werten des Anregungssignals $\underline{a}^{[i]}$, welches der Abstrahleinrichtung während der Aufnahme der i-ten Meßreihe zugeführt wird;
- Erstellen von M Anregungssignalmatrizen $\underline{A}^{[i]}$,
  wobei die Matrixelemente der ersten Spalte der i-ten Anregungssignalmatrix $\underline{A}^{[i]}$ das Anregungssignal $\underline{a}^{[i]}$ enthalten,
  wobei die Matrixelemente der ersten Zeile der i-ten Anregungssignalmatrix $\underline{A}^{[i]}$ außer dem Matrixelement $A^{[i]}_{1,1}$ gleich Null sind und
  wobei die i-te Anregungssignalmatrix $\underline{A}^{[i]}$ eine Töplitz-Matrix ist;
- Zusammenfügen der M Anregungssignalmatrizen $\underline{A}^{[i]}$ zu einer Anregungssignalmatrix $\underline{A} = (\underline{A}^{[1] \, T}, \underline{A}^{[2] \, T} \dots \underline{A}^{[M] \, T})T$,
- Berechnen des Vorhersagedifferenzvektors $\Delta \underline{x}$ durch die Vorschrift $\Delta \underline{x} = \underline{x} - \underline{A} \cdot \underline{G} \cdot \underline{s}^{[n]}$.

Vorteilhafterweise kann so das gesamte Meßsignal ohne weiteres Vorfiltern, insbesondere ohne eine Sparse-Spike-Dekonvolution, ohne eine Wiener-Optimalfilterung bzw. ohne eine sonstige Filterung, während der Rekonstruktion vorhergesagt werden, so daß zum einen der Schritt des Vorfilterns entfällt und zum anderen sämtliche in den Meßreihen vorhandene Information zur Rekonstruktion nutzbar ist.

Das Bestimmen der einzelnen Werte des Anregungssignals $a^{[i]}_t$ bzw. das Bestimmen eines Anregungssignalvektors $\underline{a}^{[i]}$ kann das Vorgeben, das Berechnen oder das Erfassen bzw. Messen der Werte umfassen. Weiter bevorzugt enthalten die Werte des Anregungssignals $a^{[i]}_t$ ebenfalls die Übertragungsfunktionen der Abstrahleinrichtung und/oder der Empfangseinrichtung. Bevorzugt kann eine vorbestimmte elektronische Anregung, beispielsweise eine Rechteckfunktion, eine Sinus-Schwingung oder ein sonstiges transientes Signal, welche der Abstrahleinrichtung zugeführt wird, in dem Anregungssignalvektor $\underline{a}^{[i]}$ gespeichert sein. Weiter bevorzugt kann die Übertragungsfunktion der Abstrahleinrichtung konvolviert mit dem der Abstrahleinrichtung zugeführten Signal in dem Anregungssignalvektor $\underline{a}^{[i]}$ gespeichert sein. Dazu kann die Konvolution bei bekannter Übertragungsfunktion numerisch durchgeführt werden. Alternativ kann die von der Abstrahleinrichtung abgestrahlte Welle auch gemessen und in dem Anregungssignalvektor $\underline{a}^{[i]}$ gespeichert sein.

Weiter bevorzugt kann die Übertragungsfunktion der Empfangseinrichtung konvolviert mit dem der Abstrahleinrichtung zugeführten Signal oder mit dem von der Abstrahleinrichtung abgestrahlten Welle in dem Anregungssignal-

vektor $\underline{a}^{[i]}$ gespeichert sein. Dazu kann die Konvolution bei bekannter Übertragungsfunktion der Empfangseinrichtung numerisch durchgeführt werden. Alternativ kann die von der Abstrahleinrichtung abgestrahlte und unmittelbar von Empfangseinrichtung empfangene Welle auch gemessen und in dem Anregungssignalvektor $\underline{a}^{[i]}$ gespeichert sein. Jede der M Anregungssignalmatrizen $\underline{A}^{[i]}$ ist eine Töplitz-Matrix, das heißt, daß die auf einer Diagonalen der Matrix befindlichen Elemente identisch sind. Mit anderen Worten umfaßt die erste Spalte jeder der M Anregungssignalmatrizen $\underline{A}^{[i]}$ jeweils das vollständige Anregungssignal $\underline{a}^{[i]}$, während die zweite Spalte ein um eine Zeile nach unten verschobenes und am Ende um einen Wert trunkiertes Anregungssignal enthält und so weiter.

Die Berechnung erfolgt dementsprechend durch die Vorschrift $\Delta\underline{x} = \underline{x} - \underline{A}\cdot\underline{G}\cdot\underline{s}^{[n]}$, wobei die Matrixmultiplikation $\underline{A}\cdot\underline{G}$ bereits für alle Iterationen im Vorfeld durchgeführt und das Ergebnis in einer weiteren Matrix gespeichert werden kann.

Vorrichtung gemäß einem Aspekt

Ein Aspekt der Erfindung betrifft eine Vorrichtung zur Bestimmung der räumlichen Verteilung eines Reflexionskoeffizienten für Wellen in einem Probenkörper umfassend:

- zumindest eine Abstrahleinrichtung für Wellen;
- zumindest eine Empfangseinrichtung für Wellen;
- zumindest eine Probenkörperaufnahme, in welcher ein Probenkörper zumindest bereichsweise derart aufnehmbar ist, daß von der zumindest einen Abstrahleinrichtung abgestrahlte Wellen auf ihrem Laufweg zu der zumindest einen Empfangseinrichtung zumindest bereichsweise durch den Probenkörper laufen;
- ein Auswerteeinrichtung, welche mit der zumindest einen Abstrahleinrichtung und der zumindest einen Empfangseinrichtung verbunden ist, wobei mittels der Auswerteeinrichtung ein erfindungsgemäßes Verfahren ausführbar ist.

Die Auswerteeinrichtung kann insbesondere Bestandteil eines Rechners bzw. eines Personalcomputers sein. Bevorzugt kann die Auswerteeinrichtung einen Mikroprozessor bzw. einen Microcontroller aufweisen, welcher ausgelegt ist, ein erfindungsgemäßes Verfahren durchzuführen, d.h. die entsprechenden Berechnungen durchzuführen. Mit anderen Worten, weist die Auswerteeinrichtung die geeigneten Schnittstellen auf, um mit der zumindest einen Abstrahleinrichtung bzw. der zumindest einen Empfangseinrichtung verbunden zu sein, insbesondere um mit diesen Daten auszutauschen. Insbesondere weist die Auswerteeinrichtung einen hinreichenden Datenspeicher auf, in welchem die zur Durchführung des erfindungsgemäßen Verfahrens notwendigen Daten abgelegt sein können. Die Abstrahleinrichtung und/oder die Empfangseinrichtung können den Probenkörper mechanisch kontaktieren, beispielsweise um Kompressionswelle oder Schallwellen zu übertragen, oder von dem Probenkörper beabstandet angeordnet sein, insbesondere bei Verwendung elektromagnetischer Wellen.

Computerprogrammprodukt gemäß einem Aspekt

Ein Aspekt der Erfindung betrifft ein Computerprogrammprodukt mit einem Programm, welches auf einem maschinenlesbaren Träger gespeichert ist, wobei das Programm die Auswerteeinrichtung einer erfindungsgemäßen Vorrichtung veranlassen kann, ein erfindungsgemäßes Verfahren auszuführen.

Der maschinenlesbare Träger kann insbesondere ein Datenträger, wie beispielsweise eine Diskette, eine CD, eine DVD, ein Magnetband, ein Speichermodul, ein Speicherbaustein usw. sein. Bevorzugt ist der Träger mit der Auswerteeinrichtung verbindbar bzw. in die Auswerteeinrichtung einführbar, um das auf dem Computerprogrammprodukt gespeicherte Programm der Auswerteeinheit bereitzustellen.

Figurenbeschreibung

Nachfolgend werden bevorzugte Ausführungsformen der vorliegenden Erfindung anhand der begleitenden Figuren beispielhaft beschrieben. Es zeigen:

Fig. 1    eine bevorzugte Ausführungsform einer Vorrichtung zur Bestimmung der räumlichen Verteilung eines Reflexionskoeffizienten für Wellen in einem Probenkörper;
Fig.2    einen Schnitt durch einen quaderförmigen Probenkörper mit einer beispielhaften Meßkonfiguration;
Fig. 3    den Schnitt durch den quaderförmigen Probenkörper mit einer weiteren beispielhaften Meßkonfiguration;
Fig. 4a-f    die Ergebnisse einer beispielhaften Rekonstruktion mittels des erfindungsgemäßen Verfahren im Vergleich zu den Ergebnissen mittels der bekannten elliptischen Rückprojektion.

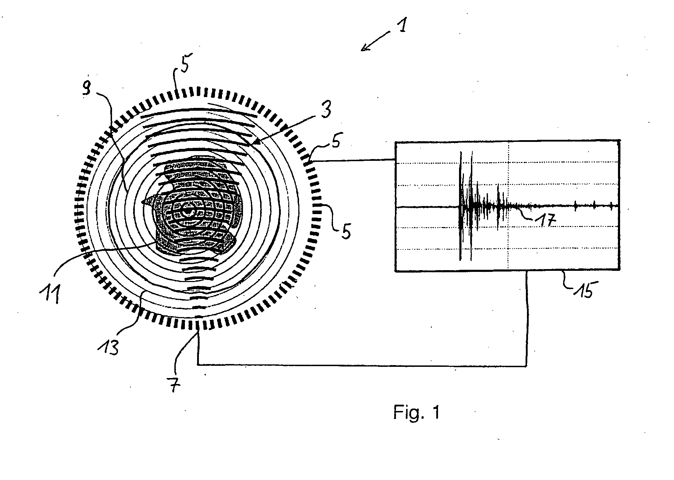

**Figur 1** zeigt eine bevorzugte Ausführungsform einer Vorrichtung 1 zur Bestimmung der räumlichen Verteilung eines Reflexionskoeffizienten $\underline{s}$ für Wellen in einem Probenkörper 3. Die Vorrichtung 1 umfaßt eine Probenkörperaufnahme (nicht gezeigt), in welche ein zylindrischer Probenkörper 3 zumindest bereichsweise aufgenommen ist. Um die Mantelfläche des zylindrischen Probenkörpers 3 ist eine Vielzahl von Empfangseinrichtungen 5 angeordnet. Bei zylindrischen Probenkörpern 3 sind die Empfangseinrichtungen 5 vorzugsweise im wesentlichen kreisförmig um den Probenkörper 3 herum angeordnet, wobei der Mittelpunkt der kreisförmigen Anordnung der Empfangseinrichtungen 5 mit der Mittelachse des zylindrischen Probenkörpers 3 zusammen fallen kann.

Die Vorrichtung 1 umfaßt zumindest eine Abstrahleinrichtung 7 für Wellen. Die Abstrahleinrichtung 7 ist dazu ausgelegt, mechanische oder elektromagnetische Wellen 9 abzustrahlen, welche den Probenkörper 3 zumindest bereichsweise durchdringen. Für den Fall eines homogenen zylindrischen Probenkörpers 3 würden die abgestrahlten Wellen 9 den Probenkörper 3 im wesentlichen geradlinig durchdringen. Der in der Fig. 1 gezeigte Probenkörper 3 weist jedoch einen Störkörper 11 auf, welcher sich durch eine von dem umgebenden Material des Probenkörpers 3 abweichende Impedanz bzw. Wellenausbreitungsgeschwindigkeit auszeichnet. Folglich werden die von der Abstrahleinrichtung 7 abgestrahlten Wellen 9, welche auf den Störkörper 11 treffen, zumindest teilweise an der Grenzfläche des Störkörpers 11 reflektiert bzw. gestreut. Jeder Punkt dieser Grenzfläche des Störkörpers 11 kann als Ausgangspunkt einer Elementarwelle im Sinne des van-Huygens-Prinzips verstanden werden. Die von dem Störkörper 11 reflektierte Welle 13 kann von den Empfangseinrichtungen 5 registriert werden. Vorzugsweise kann jede der Empfangseinrichtungen 5 die von der Abstrahleinrichtung 7 abgestrahlte und durch den Oberkörper 3 transmittierte bzw. reflektierte Welle gleichzeitig bzw. simultan erfassen. Alternativ kann eine einzelne Empfangseinrichtung 5 nacheinander an verschiedenen Meßpositionen positioniert werden, so daß nacheinander in allen der in Fig. 1 gezeigten Meßkonfigurationen gemessen werden kann. Vorteilhafterweise kann die Meßzeit bei der Verwendung einer Vielzahl von Empfangseinrichtungen 5 reduziert werden. Andererseits ermöglicht die Verwendung einer einzelnen Empfangseinrichtung, welche für jede Meßkonfiguration neu positioniert wird, sowohl einen kostengünstigen Aufbau der Vorrichtung als auch eine erhöhte Flexibilität der erreichbaren Meßkonfigurationen, da sich einzelne Empfangseinrichtungen 5 in ihrer räumlichen Ausdehnung gegenseitig nicht beeinträchtigen können. Somit kann eine dichtere räumlich Abtastung erreicht werden.

Weiter vorzugsweise kann die Abstrahleinrichtung 7 auch als Empfangseinrichtung 5 fungieren und umgekehrt. Beispielsweise kann eine Abstrahleinrichtung 7 als Piezokristall ausgebildet sein, welcher ausgelegt ist, ein an dem Piezokristall angelegtes Spannungssignal in mechanische Schwingungen umzuwandeln, wobei das gleiche Piezokristall ebenfalls als Empfangseinrichtung 5 fungieren kann, wobei eine auf das Piezokristall wirkende mechanische Schwingung eine elektrische Spannung an zwei Seiten des Piezokristalls erzeugt.

Wie in Fig. 1 gezeigt, kann die zumindest eine Abstrahleinrichtung 7 mit einer Auswerteeinrichtung 15 verbunden sein. Ebenfalls mit der Auswerteeinrichtung 15 verbunden ist die Vielzahl von Empfangseinrichtungen 5. Die Auswerteeinrichtung 15 kann zu Beginn einer Meßreihe ein vorbestimmtes Anregungssignal A erzeugen und der Abstrahleinrichtung 7 zuführen. Weiter kann die Auswerteeinrichtung 15 gleichzeitig oder mit geringer Zeitverzögerung zur Zuführung des Anregungssignals $a^{[i]}$ zu der Abstrahleinrichtung 7 die Registrierung von Meßwerten an den Empfangseinrichtungen 5 starten. Nach der Erfassung einer vorbestimmten Anzahl von T Meßwerten an den Empfangseinrichtungen 5 kann die Auswerteeinrichtung 15 die Erfassung von Meßwerten beenden und die Übertragung der registrierten Meßwerte von den Empfangseinrichtungen 5 zur Auswerteeinrichtung 15 durchführen. Eine beispielhafte Meßreihe 17 bestehend aus T einzelnen Meßwerten ist in Fig. 1 gezeigt. Im Anschluß an die aus einer oder mehreren Meßreihen bestehenden Messung des Probenkörpers 3 kann die Auswerteeinrichtung 15 das erfindungsgemäße Verfahren zur Rekonstruktion der räumlichen Verteilung des Reflexionskoeffizienten durchführen.

Es versteht sich, daß anstatt des beispielhaften zylindrischen Probenkörpers 3 auch ein quaderförmiger oder unregelmäßig geformter Probenkörper mittels der in der Fig. 1 gezeigten Vorrichtung 1 vermessen werden kann. Weiter versteht sich, daß die Anordnung der Empfangseinrichtungen 5 und der zumindest einen Abstrahleinrichtung 7 auch in anderer Weise erfolgen kann. Beispielsweise können die Empfangseinrichtungen 5 in einer Ebene rechteckförmig oder quadratförmig angeordnet sein. Weiterhin können die Empfangseinrichtungen 5 ebenfalls räumlich verteilt um den Probenkörper 3 angeordnet sein. Für den Fall, daß die Empfangseinrichtungen 5 sowie die zumindest eine Abstrahleinrichtung 7 aufgrund der gewählten Meßmethode die Oberfläche des Probenkörpers 3 kontaktieren müssen, versteht es sich, daß die geometrische Anordnung der Empfangseinrichtungen 5 sowie der Abstrahleinrichtung 7 im wesentlichen von der Geometrie des Probenkörpers 3 abhängig ist.

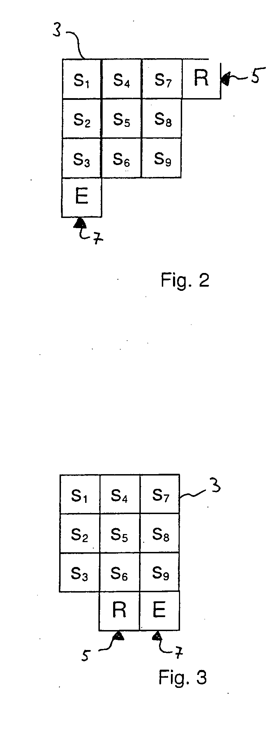

**Figur 2** zeigt einen Schnitt durch einen beispielhaften quadratischen Probenkörper 3, welcher in der Schnittebene mittels neun Volumenelementen und den zugeordneten Reflexionskoeffizienten $s_j$ parametrisiert ist. Der Zwischenraum zwischen dem Probenkörper 3 und der Abstrahleinrichtung 7 ist durch das Volumenelement E und der Zwischenraum zwischen der Empfangseinrichtung 5 und dem Probenkörper 3 ist durch das Volumenelement R gekennzeichnet. Anhand des in Fig. 2 gezeigten beispielhaften Probenkörpers 3 wird die Erstellung der Laufwegematrix $\underline{G}^{[1]}$ für den Fall gezeigt, daß jedes der neun gezeigten Volumenelemente $s_1$ bis sg einen Störkörper 11 beinhalten kann. Weiterhin wird angenommen, daß die von der Abstrahleinrichtung 7 abgestrahlte Welle die Form eines $\delta$-Impulses bzw. eines Dirac-Impulses hat. Die an der Empfangseinrichtung 5 registrierbare Meßreihe ergibt sich dann zu $\underline{x}^{[1]} = \underline{G}^{[1]} \cdot \underline{s}$, wobei die Matrix $\underline{G}^{[1]}$ aufgrund der vorigen Annahmen lediglich Nullen und Einsen aufweist.

Eine Reflexion an dem ersten Volumenelement mit dem Reflexionskoeffizienten $s_1$ wird in der Laufwegematrix

$\underline{G}^{[1]}$ dadurch dargestellt, daß in der ersten Spalte der Laufwegematrix $\underline{G}^{[1]}$, welche jeweils den Einfluß des ersten Volumenelementes repräsentiert, der Wert 1 in der sechsten Zeile gesetzt wird. Die sechste Zeile der Laufwegematrix $\underline{G}^{[1]}$ repräsentiert den Einfluß des Probenkörpers auf die Meßreihe zum Zeitpunkt t = 6, das heißt auf den Meßwert $x_6$ der Meßreihe. Diese einfache Zuordnung kann unter der Annahme durchgeführt werden, daß sowohl die abgestrahlte Welle als auch die reflektierte Welle in jedem Volumenelement des Probenkörpers als auch in den Volumenelementen E und R, welche den Zwischenraum zwischen dem Probenkörper und der Abstrahl- bzw. Empfangseinrichtung beschreibt, im wesentlichen gleich groß ist. Diese Annahme ist insbesondere bei der Verwendung elektromagnetischer Wellen, beispielsweise Mikrowellen, oder bei der Verwendung von Kompressionswellen, insbesondere bei der Untersuchung von Probenkörpern in einer Immersionsflüssigkeit mittels Ultraschallwellen, hinreichend genau erfüllt.

In dem in Fig. 2 gezeigten Fall läuft eine Welle durch die Volumenelemente E, $s_3$ und $s_2$ bevor sie auf den reflektierenden Störkörper an der Position $s_1$ trifft. Die reflektierte Welle läuft dann durch die Volumenelemente $s_4$, $s_7$ und R bis zur Empfangseinrichtung 5. Somit durchläuft die an der Empfangseinrichtung 5 gemessene Welle insgesamt sechs Volumenelemente, wobei angenommen wird, daß jedes Volumenelement innerhalb einer Zeiteinheit durchlaufen wird, welche dem Abtastintervall $\Delta\tau$ der an der Empfangseinrichtung 5 erfaßten Meßreiche entspricht. Somit trifft die Welle nach sechs Zeiteinheiten bzw. nach sechs Abtastintervallen an der Empfangseinrichtung 5 ein, so daß dort der registrierte Wert $x_6$ das Auftreffen der Welle durch einen von Null verschiedenen Wert repräsentieren wird.

Analog kann unter der Annahme, daß jedes der weiteren Volumenelemente einen Reflexionskoeffizienten $s_2$ bis sg aufweisen kann, der Laufweg von der Abstrahleinrichtung 7 durch den Probenkörper 3 zur Empfangseinrichtung 5 durch die Volumenelemente des Probenkörpers 3 in der Laufwegematrix $\underline{G}^{[1]}$ kodiert werden. Wird dieses Verfahren für jede der neun Störkörperpositionen mit den Reflexionskoeffizienten $s_2$ bis sg durchgeführt, so ergibt sich die folgende Gleichung:

$$
\begin{pmatrix} x_1 \\ x_2 \\ x_3 \\ x_4 \\ x_5 \\ x_6 \\ x_7 \\ x_8 \\ x_9 \end{pmatrix} =
\begin{pmatrix}
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 1 & 1 & 0 & 1 & 1 \\
0 & 1 & 1 & 1 & 0 & 0 & 1 & 0 & 0 \\
1 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0
\end{pmatrix} \circ
\begin{pmatrix} s_1 \\ s_2 \\ s_3 \\ s_4 \\ s_5 \\ s_6 \\ s_7 \\ s_8 \\ s_9 \end{pmatrix}
\qquad (4)
$$

In einer bevorzugten Ausführungsform des Rekonstruktionsverfahrens kann die Form des Anregungssignals, welches der Abstrahleinrichtung zugeführt wird, bei der Rekonstruktion der räumlichen Verteilung des Reflexionskoeffizienten s berücksichtigt werden. Dazu müssen die einzelnen auftretenden Signale, welche in dem in der Fig. 2 gezeigten Beispiel als $\delta$-Impuls angenommen wurden, mit der Form des Anregungssignals $\underline{a}^{[1]}$ konvolviert bzw. gefaltet werden. Dies kann in einfacher Weise durch eine Matrixmultiplikation mit einer Anregungssignalmatrix $\underline{A}^{[1]}$ erfolgen, welche die Gestalt einer Töplitz-Matrix aufweist. Die erste Zeile der Anregungssignalmatrix $\underline{A}^{[1]}$ ist dabei mit Nullen besetzt und die erste Spalte der Anregungssignalmatrix $\underline{A}^{[1]}$ enthält das Anregungssignal $a^{[1]}$. Mit Bezug zur Fig. 2 kann das in der Gleichung 4 gezeigte lineare Gleichungssystem um die Anregungssignalmatrix $\underline{A}^{[1]}$ erweitert werden, um die Form der registrierten Meßreihe $\underline{x}$ bei der Rekonstruktion zu berücksichtigen. Das erweiterte lineare Gleichungssystem ergibt sich zu:

$$
\begin{pmatrix} x_1 \\ x_2 \\ x_3 \\ x_4 \\ x_5 \\ x_6 \\ x_7 \\ x_8 \\ x_9 \end{pmatrix} =
\begin{pmatrix}
a_1 & 0 & 0 & 0 & 0 & 0 & 0 & 0 & 0 \\
a_2 & a_1 & 0 & 0 & 0 & 0 & 0 & 0 & 0 \\
a_3 & a_2 & a_1 & 0 & 0 & 0 & 0 & 0 & 0 \\
a_4 & a_3 & a_2 & a_1 & 0 & 0 & 0 & 0 & 0 \\
a_5 & a_4 & a_3 & a_2 & a_1 & 0 & 0 & 0 & 0 \\
a_6 & a_5 & a_4 & a_3 & a_2 & a_1 & 0 & 0 & 0 \\
a_7 & a_6 & a_5 & a_4 & a_3 & a_2 & a_1 & 0 & 0 \\
a_8 & a_7 & a_6 & a_5 & a_4 & a_3 & a_2 & a_1 & 0 \\
a_9 & a_8 & a_7 & a_6 & a_5 & a_4 & a_3 & a_2 & a_1
\end{pmatrix} \circ
\begin{pmatrix}
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 1 & 1 & 0 & 1 & 1 \\
0 & 1 & 1 & 1 & 0 & 0 & 1 & 0 & 0 \\
1 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0
\end{pmatrix} \circ
\begin{pmatrix} s_1 \\ s_2 \\ s_3 \\ s_4 \\ s_5 \\ s_6 \\ s_7 \\ s_8 \\ s_9 \end{pmatrix}
\tag{5}
$$

Zweckmäßigerweise wird die Multiplikation der das Anregungssignal enthaltenden Töplitz-Matrix mit der Laufwegematrix $\underline{G}^{[1]}$ zu Beginn des Rekonstruktionsverfahrens einmalig durchgeführt und zwischengespeichert.

**Figur 3** zeigt den in Fig. 2 gezeigten Schnitt durch den Probenkörper 3, wobei die Meßkonfiguration hinsichtlich der Positionen der Abstrahleinrichtung 7 und der Empfangseinrichtung 5 verändert ist. Die Empfangseinrichtung 5 ist unmittelbar benachbart zu der Abstrahleinrichtung 7 angeordnet. Dementsprechend bewirken Reflexionskoeffizienten verschieden von 1 in den mit $s_6$ und $s_9$ charakterisierten Volumenelementen eine Reflexion der abgestrahlten Welle im Bereich des Probenkörpermantels. Für den Fall, daß in den mit $s_6$ und $s_9$ charakterisierten Volumenelementen ein Störkörper lokalisiert ist, beträgt die Laufzeit der reflektierten Welle, welche von der Empfangseinrichtung 5 aufgenommen wird, lediglich zwei Abtastintervalle $\Delta T$, was der Zeit entspricht, welche die registrierte Welle benötigt, um durch die mit R und E gekennzeichneten Volumenelemente zu laufen. Entsprechend der Wellenlaufzeit von zwei Zeitintervallen sind die Werte der Laufwegematrix $\underline{G}^{[2]}$ in der zweiten Zeile in den Elementen der sechsten und neunten Spalte gleich 1 gesetzt. Insgesamt ergibt sich für die in Fig. 3 gezeigte Meßkonfiguration die Laufwegematrix $\underline{G}^{[2]}$ gemäß der folgenden Gleichung:

$$
\begin{pmatrix} y_1 \\ y_2 \\ y_3 \\ y_4 \\ y_5 \\ y_6 \\ y_7 \\ y_8 \\ y_9 \end{pmatrix} =
\begin{pmatrix}
0 & 0 & 0 & 0 & 0 & 0 & 0 & 0 & 0 \\
0 & 0 & 0 & 0 & 0 & 1 & 0 & 0 & 1 \\
0 & 0 & 0 & 0 & 0 & 0 & 0 & 0 & 0 \\
0 & 0 & 1 & 0 & 1 & 0 & 0 & 1 & 0 \\
0 & 1 & 0 & 0 & 0 & 0 & 0 & 0 & 0 \\
0 & 0 & 0 & 1 & 0 & 0 & 1 & 0 & 0 \\
1 & 0 & 0 & 0 & 0 & 0 & 0 & 0 & 0 \\
0 & 0 & 0 & 0 & 0 & 0 & 0 & 0 & 0 \\
0 & 0 & 0 & 0 & 0 & 0 & 0 & 0 & 0
\end{pmatrix} \circ
\begin{pmatrix} s_1 \\ s_2 \\ s_3 \\ s_4 \\ s_5 \\ s_6 \\ s_7 \\ s_8 \\ s_9 \end{pmatrix},
\tag{6}
$$

wobei die Meßreihe, welche der gemessenen Meßreihe $x^{[2]}$ entspricht, abweichend mit $\underline{y}$ bezeichnet ist. Um die Rekonstruktion der Verteilung der Reflexionskoeffizienten $\underline{s}$ in dem Probenkörper 3 auf Basis der beiden unterschiedlichen Meßkonfigurationen, die in den Figuren 2 und 3 gezeigt sind, durchzuführen, werden die Meßreihen $\underline{x}^{[1]}$ und $\underline{y}$ (entspricht $\underline{x}^{[2]}$) sowie die dazugehörigen Laufwegematrizen $\underline{G}^{[1]}$ und $\underline{G}^{[2]}$ zu einem linearen Gleichungssystem zusammengeführt. Da die in den Gleichungen 4 und 6 gezeigten linearen Gleichungssysteme aufgrund der Nullzeilen der Laufwegematrizen $\underline{G}^{[1]}$ und $\underline{G}^{[2]}$ Gleichungen enthalten, welche zu der Lösung des Gleichungssystems nichts beitragen, können diese Zeilen aus dem linearen Gleichungssystem gestrichen werden. Nach Streichung der unrelevanten Gleichungen bzw. Zeilen des Gleichungssystems läßt sich das zu lösende lineare Gleichungssystem wie folgt schreiben:

$$\begin{pmatrix} x_4 \\ x_5 \\ x_6 \\ y_2 \\ y_4 \\ y_5 \\ y_6 \\ y_7 \end{pmatrix} = \begin{pmatrix} 0 & 0 & 0 & 0 & 1 & 1 & 0 & 1 & 1 \\ 0 & 1 & 1 & 1 & 0 & 0 & 1 & 0 & 0 \\ 1 & 0 & 0 & 0 & 0 & 0 & 0 & 0 & 0 \\ 0 & 0 & 0 & 0 & 0 & 1 & 0 & 0 & 1 \\ 0 & 0 & 1 & 0 & 1 & 0 & 0 & 1 & 0 \\ 0 & 1 & 0 & 0 & 0 & 0 & 0 & 0 & 0 \\ 0 & 0 & 0 & 1 & 0 & 0 & 1 & 0 & 0 \\ 1 & 0 & 0 & 0 & 0 & 0 & 0 & 0 & 0 \end{pmatrix} \circ \begin{pmatrix} s_1 \\ s_2 \\ s_3 \\ s_4 \\ s_5 \\ s_6 \\ s_7 \\ s_8 \\ s_9 \end{pmatrix}. \qquad (7)$$

Somit kann die Größe des zu lösenden linearen Gleichungssystems vorteilhafterweise auf das notwendige verkleinert werden.

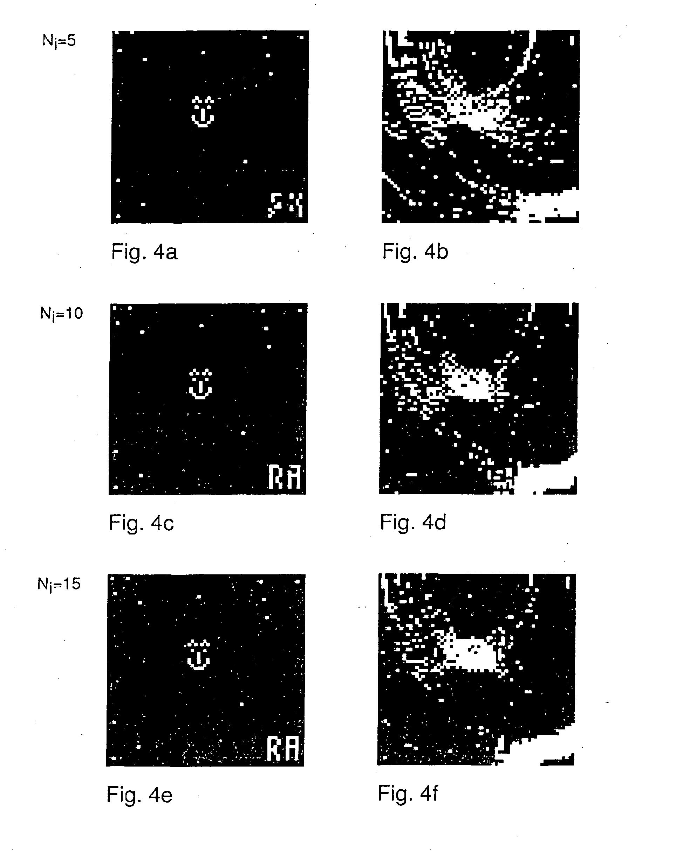

Die **Figuren 4a bis 4f** zeigen die Ergebnisse einer beispielhaften Rekonstruktion mittels des erfindungsgemäßen Verfahren im Vergleich zu den Ergebnissen mittels der bekannten "Synthetic Aperture Focussing Technique" (SAFT) bzw. der elliptischen Rückprojektion.

Die **Figuren 4a** und **4b** zeigen die Ergebnisse der Rekonstruktion unter Verwendung von M = 5 Meßreihen $\underline{x}$. Die Meßreihe $\underline{x}$ kann mit der Übertragungsfunktion der gesamten Meßstrecke, d.h. dem Anregungssignal a sowie der Impulsantwortfunktion der Abstrahleinrichtung und der Impulsantwortfunktion der Empfangseinrichtung konvolviert bzw. gefaltet sein, wobei seitens der Rekonstruktion ebenfalls diese Konvolution wie zur Gleichung (5) beschrieben durchgeführt werden muß, um die Meßreihen vollständig anpassen zu können. Während der Rekonstruktion bzw. der darin vorgenommenen Optimierung findet auch die Dekonvolution bzw. die Entfaltung der Meßreihen statt.

Der Vergleich des in Figur 4a gezeigten mittels des erfindungsgemäßen Verfahren erhaltenen Rekonstruktionsergebnisses mit dem in Figur 4b gezeigten Ergebnis, welcher mit Hilfe der elliptischen Rückprojektion gewonnen wurde zeigt, daß bereits eine relativ geringe Anzahl von Meßreihen genügen, um mit dem erfindungsgemäßen Verfahren Strukturen im Kernbereich eines Probenkörpers aufzulösen. Dagegen sind anhand der in Figur 4b gezeigten Rekonstruktion lediglich zwei anomale Bereiche detektierbar, aber nicht auflösbar.

Die **Figuren 4c** und **4d** zeigen die Ergebnisse der Rekonstruktion unter Verwendung einer erhöhten Anzahl von M = 10 Meßreihen $\underline{x}$. Während das erfindungsgemäße Verfahren, wie in Fig. 4c gezeigt, eine weitere Anomalie im unteren rechten Randbereich des Probenkörpers nahezu vollständig auflöst, verbessert sich das in Fig. 4d gezeigte Rekonstruktionsergebnis der elliptischen Rückprojektion nur wenig.

Die Figuren 4e und 4f zeigen die Ergebnisse der Rekonstruktion unter Verwendung einer nochmals erhöhten Anzahl von M = 15 Meßreihen $\underline{x}$. Das erfindungsgemäße Verfahren löst, wie in Fig. 4e gezeigt, die beiden im Probenkörper vorhandenen Anomalien vollständig auf. Dagegen kann die elliptische Rückprojektion allenfalls die zwei Anomalien detektieren, jedoch die Struktur dieser Anomalien nicht auflösen, wie in Fig. 4f gezeigt ist.

Bezugszeichenliste

| 1 | Vorrichtung |
| 3 | Probenkörper |
| 5 | Empfangseinrichtung für Wellen |
| 7 | Abstrahleinrichtung für Wellen |
| 9 | abgestrahlte Welle |
| 11 | Störkörper |
| 13 | reflektierte Welle |
| 15 | Auswerteeinrichtung |
| 17 | Meßreihe |

**Patentansprüche**

1. Verfahren zur computergestützten Rekonstruktion der räumlichen Verteilung von Reflexionskoeffizienten für Wellen in einem Probenkörper (3) umfassend die folgenden Schritte:

   - Parametrisieren des Probenkörpers (3) durch N Volumenelemente;
   - Bestimmen von M verschiedenen Meßkonfigurationen einer Abstrahleinrichtung (7) für Wellen und einer zugeordneten Empfangseinrichtung (5) für Wellen;
   - Festlegen der Anzahl T der Meßpunkte, welche von der Empfangseinrichtung während einer zu registrierenden Meßreihe $x^{[i]}_t$ mit $t \in [1, 2, ..., T]$ in der i-ten Meßkonfiguration mit $i \in [1, 2, ..., M]$ registriert werden, wobei die t-te Messung zu einem Zeitpunkt $\tau(t)$ erfolgt;
   - Erstellen von M Laufwegematrizen $\underline{G}^{[i]}$, wobei in der i-ten Laufwegematrix $\underline{G}^{[i]}$ die möglichen Laufwege von reflektierten und/oder gestreuten Wellen durch die N Volumenelemente des Probenkörpers von der Abstrahleinrichtung (7) zu der zugeordneten Empfangseinrichtung (5) gemäß der i-ten Meßkonfiguration mit $i \in [1, 2, ..., M]$ und eine zu jedem Laufweg zugeordnete Laufzeit $\tau(t)$ der Welle durch den Probenkörper (3) codiert sind;
   - Registrieren von M Meßreihen gemäß der M verschiedenen Meßkonfigurationen, wobei der Abstrahleinrichtung (7) bei der i-ten Meßreihe ein Anregungssignal $\underline{a}^{[i]}$ zugeführt wird und die zugeordnete Empfangseinrichtung (5) eine Meßreihe $\underline{x}^{[i]}$ registriert;
   - Zusammenfügen der M Meßreihen zu einem einzigen Meßvektor $\underline{x} = (\underline{x}^{[1]}, \underline{x}^{[2]} ... \underline{x}^{[M]})^T$;
   - Zusammenfügen der M Laufwegematrizen $\underline{G}^{[i]}$ zu einer einzigen Laufwegematrix $\underline{G} = (\underline{G}^{[1]\,T}, \underline{G}^{[2]\,T} ... \underline{G}^{[M]\,T})T$,
   - Initialisieren von N Reflexionskoeffizienten $s^{[n=1]}_j$ mit $j \in [1, 2, ..., N]$ eines Reflexionskoeffizientenvektors $\underline{s}^{[n]}$ mit initialen Schätzwerten, wobei jeder Reflexionskoeffizient $s^{[n]}_j$ dem j-ten Volumenelement der N Volumenelemente zugeordnet ist und innerhalb des zugeordneten Volumenelements konstant ist;
   - Berechnen eines Vorhersagedifferenzvektors $\Delta\underline{x} = \underline{x} - \underline{G}\cdot\underline{s}^{[n]}$, welcher die Abweichung zwischen den Elementen der M registrierten Meßreihen $x^{[i]}_t$ und den vorhersagbaren Meßreihen $G^{[i]}_{tj}\cdot s^{[n]}_j$ enthält;
   - Minimieren einer Norm des Vorhersagedifferenzvektors $\| \Delta\underline{x} \|$; und
   - Bereitstellen der Reflexionskoeffizienten $\underline{s}^{[n]}$.

2. Verfahren nach Anspruch 1, wobei die Minimierung mittels der Lp-Norm des Vorhersagedifferenzvektors $\| \Delta\underline{x} \|_p$ mit $0 < p \leq 2$ durchgeführt wird, wobei die Lq-Norm des Vektors der Reflexionskoeffizienten $\| \underline{s}^{[n]} \|_q$ minimiert wird, wobei gilt $0 < q \leq 1$.

3. Verfahren nach Anspruch 1, wobei die Minimierung mittels der Lp-Norm des Vorhersagedifferenzvektors $\| \Delta\underline{x} \|_p$ mit $0 < p \leq 2$ durchgeführt wird, wobei die Lq-Norm der totalen Varianz des Vektors der Reflexionskoeffizienten $\| \sigma(\underline{s}^{[n]}) \|_q$ minimiert wird, wobei gilt $0 < q \leq 1$.

4. Verfahren nach einem der vorigen Ansprüche, wobei Reflexionskoeffizientenvektor $\underline{s}$ derart minimiert wird, daß $\underline{s}$ spärlich besetzt ist, wobei die Anzahl k der von Null verschiedenen Elemente vorbestimmbar ist.

5. Verfahren nach einem der vorigen Ansprüche, wobei das Minimieren der Norm $\| \Delta x \|_p$ iterativ erfolgt und das iterative Minimieren die folgenden Schritte umfaßt:

   -- Berechnen des Vorhersagedifferenzvektors $\Delta\underline{x} = \underline{x} - \underline{G}\cdot\underline{s}^{[n]}$ für die n-te Iteration;
   -- Berechnen eines Aufdatierungsvektors $\Delta\underline{s}$;
   -- Berechnen eines neuen Reflexionskoeffizientenvektors $\underline{s}^{[n+1]} = \underline{s}^{[n]} + \Delta\underline{s}$.

6. Verfahren nach Anspruch 5, wobei das iterative Minimieren des Abstandes $\| \Delta x \|_p$ die folgenden Schritte umfaßt:

   -- Umwandeln des Aufdatierungsvektor $\Delta\underline{s}$ in einen 2k-spärlich besetzten Aufdatierungsvektor.

7. Verfahren nach Anspruch 5 oder 6, wobei das iterative Minimieren des Abstandes $\| \Delta x \|_p$ die folgenden Schritte umfaßt:

   -- Umwandeln des neu berechneten Reflexionskoeffizientenvektors $\underline{s}^{[n+1]}$ in einen k-spärlich besetzten Vektor.

8. Verfahren nach einem der vorigen Ansprüche, wobei p=2 gilt, so daß das Minimieren der Norm $\| \Delta x \|_p$ mittels der $L_2$-Norm erfolgt.

**9.** Verfahren nach einem der vorigen Ansprüche, wobei q=1 gilt, so daß das Minimieren der Norm $\| \Delta s \|_q$ mittels der $L_1$-Norm erfolgt.

**10.** Verfahren nach einem der vorigen Ansprüche, umfassend die folgenden Schritte:

- Bestimmen von T Werten des Anregungssignals $\underline{a}^{[i]}$, welches der Abstrahleinrichtung während der Aufnahme der i-ten Meßreihe zugeführt wird;
- Erstellen von M Anregungssignalmatrizen $\underline{A}^{[i]}$,
wobei die Matrixelemente der ersten Spalte der i-ten Anregungssignalmatrix $\underline{A}^{[i]}$ das Anregungssignal $\underline{a}^{[i]}$ enthalten,
wobei die Matrixelemente der ersten Zeile der i-ten Anregungssignalmatrix $\underline{A}^{[i]}$ außer dem Matrixelement $A^{[1]}_{1,1}$ gleich Null sind und
wobei die i-te Anregungssignalmatrix $\underline{A}^{[i]}$ eine Töplitz-Matrix ist;
- Zusammenfügen der M Anregungssignalmatrizen $\underline{A}^{[i]}$ zu einer Anregungssignalmatrix $\underline{A} = (\underline{A}^{[1]\,T}, \underline{A}^{[2]\,T} .., \underline{A}^{[M]\,T})T$,
- Berechnen des Vorhersagedifferenzvektors $A\underline{x}$ durch die Vorschrift $A\underline{x} = \underline{x} - \underline{A}\cdot\underline{G}\cdot\underline{s}^{[n]}$.

**11.** Vorrichtung zur Bestimmung der räumlichen Verteilung eines Reflexionskoeffizienten für Wellen in einem Probenkörper (3) umfassend:

- zumindest eine Abstrahleinrichtung (7) für Wellen;
- zumindest eine Empfangseinrichtung (5) für Wellen;
- zumindest eine Probenkörperaufnahme, in welcher ein Probenkörper (3) zumindest bereichsweise derart aufnehmbar ist, daß von der zumindest einen Abstrahleinrichtung (7) abgestrahlte Wellen (9) auf ihrem Laufweg zu der zumindest einen Empfangseinrichtung (5) zumindest bereichsweise durch den Probenkörper (3) laufen;
- ein Auswerteeinrichtung (15), welche mit der zumindest einen Abstrahleinrichtung (7) und der zumindest einen Empfangseinrichtung (5) verbunden ist, wobei mittels der Auswerteeinrichtung (15) ein Verfahren gemäß einem der Ansprüche 1 bis 10 ausführbar ist.

**12.** Computerprogrammprodukt mit einem Programm, welches auf einem maschinenlesbaren Träger gespeichert ist, wobei das Programm die Auswerteeinrichtung (15) einer Vorrichtung gemäß Anspruch 11 veranlassen kann, ein Verfahren gemäß einem der Ansprüche 1 bis 10 auszuführen.

**Claims**

**1.** A method for computer-based reconstruction of the spatial distribution of reflection coefficients for waves in a sample body (3) comprising the following steps:

- parameterizing the sample body (3) by N volume elements;
- determining M different measurement configurations of an emitting device (7) for waves and an associated receiving device (5) for waves;
- defining the number T of measurement points, which are registered by the receiving device during a measurement series $x^{[i]}_t$ with $t \, \varepsilon \, [1, 2, ..., T]$ to be registered in the i-th measurement configuration with $i \, \varepsilon \, [1, 2, ..., M]$, wherein the t-th measurement occurs at a point in time $\tau$ (t);
- creating M travel path matrices $\underline{G}^{[i]}$, wherein the i-th travel path matrix $\underline{G}^{[i]}$ of the possible travel paths of reflected and/or scattered waves by the N volume elements of the sample body from the emitting device (7) to the associated receiving device (5) are coded according to the i-th measurement configuration with $i \, \varepsilon \, [1, 2, .... M]$ and a travel time $\tau$ (t) of the wave assigned to each travel path through the sample body (3);
- registering M measurement series according to the M different measurement configurations, wherein the emitting device (7) is supplied an excitation signal $a^{[i]}$ with the i-th measurement series, and the associated receiving device (5) registers a measurement series $\underline{x}^{[i]}$;
- combining the M measurement series into a single measurement vector $\underline{x} = (\underline{x}^{[1]}, \underline{x}^{[2]}, ... \underline{x}^{[M]})^T$;
- combining M travel path matrices $\underline{G}^{[i]}$ into a single travel path matrix $\underline{G} = (\underline{G}^{[1]T}, \underline{G}^{[2]T}, ... \underline{G}^{[M]T})^T$,
- initializing N reflection coefficients $s^{[n=1]}_j$ with $j \, \varepsilon \, [1, 2, .... N]$ of a reflection coefficient vector $\underline{s}^{[n]}$ with initial estimates, wherein each reflection coefficient $s^{[n]}_j$ is assigned to the j-th volume element of the N volume elements, and is constant within the assigned volume element;
- calculating a predicted difference vector $\Delta\underline{x} = \underline{x} - \underline{G}\cdot\underline{s}^{[n]}$, which contains the difference between the elements of the M registered measurement series $x^{[i]}_t$ and the predictable measurement series $G^{[i]}_{tj} s^{[n]}_j$;
- minimizing a norm of the predicted difference vector $\| \Delta \underline{x} \|$; and
- providing the reflection coefficients $\underline{s}^{[n]}$.

2. The method according to 1, wherein the minimization is performed by means of the $L_p$-norm of the predicted difference vector $\| \Delta \underline{x} \|p$ with $0 < p \leq 2$, wherein the Lq-norm of the vector of the reflection coefficients $\| \underline{s}^{[n]} \|q$ is minimized, where $0 < q \leq 1$.

3. The method according to 1, wherein the minimization is performed by means of the Lp-norm of the predicted difference vector $\| \Delta \underline{x} \|p$ with $0 < p \leq 2$, wherein the Lq-norm of the total variance of the vector of the reflection coefficients $\| \sigma (s^{[n]}) \|q$ is minimized, where $0 < q \leq 1$.

4. The method according to one of the preceding claims, wherein the reflection coefficient vector $\underline{s}$ is minimized so that $\underline{s}$ is sparse, wherein the number k of the elements different from zero can be predetermined.

5. The method according to one of the preceding claims, wherein the minimization of the norm $\| \Delta x \|p$ is performed iteratively, and the iterative minimization comprises the following steps:

   - calculating the predicted difference vector $\Delta \underline{x} = \underline{x} - \underline{G} \cdot s^{[n]}$ for the n-th iteration;
   - calculating an updating vector $\Delta \underline{s}$;
   - calculating a new reflection coefficient vector $\underline{s}^{[n+1]} = \underline{s}^{[n]} + \Delta \underline{s}$.

6. The method according to claim 5, wherein the iterative minimization of the distance $\| \Delta x \|p$ comprises the following steps:

   - converting the updating vector $\Delta \underline{s}$ into a 2k sparse updating vector.

7. The method according to claim 5 or 6, wherein the iterative minimization of the distance $\| \Delta x \|p$ comprises the following steps:

   - converting the newly calculated reflection coefficient vector $\underline{s}^{[n+1]}$ into a k sparse vector.

8. The method according to one of the preceding claims, where p=2, so that the minimization of the norm $\| \Delta x \|p$ occurs by means of the L2-norm.

9. The method according to one of the preceding claims, where q=1, so that the minimization of the norm $\| \Delta s \|q$ occurs by means of the L1-norm.

10. The method according to one of the preceding claims, comprising the further steps:

   - determining T values of the excitation signal $\underline{a}^{[i]}$, which is supplied to the emitting device during the recording of the i-th measurement series;
   - creating M excitation signal matrices $\underline{A}^{[i]}$,
   wherein the matrix elements of the first column of the i-th excitation signal matrix $\underline{A}^{[i]}$ contain the excitation signal $\underline{a}^{[i]}$,
   wherein the matrix elements of the first row of the i-th excitation signal matrix $\underline{A}^{[i]}$ except the matrix element $A^{[i]}_{1,1}$ are equal to zero, and
   wherein the i-th excitation signal matrix $\underline{A}^{[i]}$ is a Toeplitz matrix;
   - combining the M excitation signal matrices $\underline{A}^{[i]}$ into an excitation signal matrix $\underline{A} = (\underline{A}^{[1]T}, \underline{A}^{[2]T}, ... \underline{A}^{[M]T})^T$,
   - calculating the predicted difference vector $\Delta \underline{x}$ according to the rule $\Delta \underline{x} = \underline{x} - \underline{A} \cdot \underline{G} \cdot \underline{s}^{[n]}$.

11. An apparatus for determining the spatial distribution of a reflection coefficient for waves in a sample body (3) comprising:

   - at least one emitting device (7) for waves;
   - at least one receiving device (5) for waves;
   - at least one sample body receiver, in which a sample body (3) can be received at least in regions, so that waves (9) emitted by the at least one emitting device (7) on the travel path thereof to the at least one receiving device (5) run at least in regions through the sample body (3);
- an evaluation device (15), which is connected to the at least one remitting device (7) and to the at least one receiving device (5), wherein a method according to one of the claims 1 to 10 can be executed by means of the evaluation device (15).

**12.** A computer program product having a program which is stored on a machine-readable medium, wherein the program can trigger the evaluation device (15) of an apparatus according to claim 11, to execute a method according to one of the claims 1 to 10.

**Revendications**

**1.** Procédé pour la reconstruction assistée par ordinateur de la répartition spatiale de coefficients de réflexion pour des ondes dans un échantillon (3), comprenant les étapes suivantes :

- paramétrer l'échantillon (3) par N éléments de volume ;
- déterminer M configurations de mesure différentes d'un moyens d'émission (7) pour ondes et un moyen de réception (5) pour ondes associé;
- spécifier le nombre T des points de mesure, qui sont enregistrés par le moyen de réception pendant une série de mesures $x^{[i]}_t$ qui doit être enregistrée, avec $t \in [1, 2, ..., T]$ dans la $i^{ème}$ configuration de mesure avec $i \in [1, 2, ..., M]$, sachant que la $t^{ième}$ mesure a lieu à un moment donné $\tau$ (t) ;
- créer M matrices d'acheminement $\underline{G}^{[i]}$, sachant que dans la $i^{ème}$ matrice d'acheminement $\underline{G}^{[i]}$ les parcours possibles d'ondes réfléchies et/ou dispersées à travers les N éléments de volume de l'échantillon à partir du moyen d'émission (7) jusqu'au moyen de réception (5) associé d'après la $i^{ème}$ configuration de mesure avec $i \in [1, 2, ..., M]$ et une durée de la course $\tau$ (t) d'onde à travers l'échantillon (3) associée à chaque parcours sont codés ;
- enregistrer M séries de mesure d'après les M configurations de mesures différentes, sachant qu'à la $i^{ème}$ série de mesure on amène un signal d'excitation $\underline{a}^{[i]}$ au moyen d'émission (7) et que le moyen de réception (5) associé enregistre une série de mesures $\underline{x}^{[i]}$ ;
- réunir les M séries de mesure en un seul vecteur de mesure $\underline{x} = (\underline{x}^{[1]}, \underline{x}^{[2]}, ..., \underline{x}^{[M]})^T$ ;
- réunir les M matrices d'acheminement $\underline{G}^{[i]}$ en une seule matrice d'acheminement $\underline{G} = (\underline{G}^{[1]T}, \underline{G}^{[2]T} ... G^{[M]T})^T$,
- initialiser N coefficients de réflexion $s^{[n=1]}_j$ avec $j \in [1, 2, ..., N]$ d'un vecteur de coefficients de réflexion $\underline{s}^{[n]}$ avec des estimations initiales, sachant que chaque coefficient de réflexion $s^{[n]}_j$ est associé au $j^{ème}$ élément de volume des N éléments de volume et qu'il est constant à l'intérieur de l'élément de volume associé ;
- calculer un vecteur différence de prévision $\Delta\underline{x} = \underline{x} - \underline{G}\cdot\underline{s}^{[n]}$, qui contient l'écart entre les éléments des M séries de mesure $x^{[i]}_t$ enregistrées et les séries de mesure prévisibles $G^{[i]}_{tj}\cdot s^{[n]}_j$ ;
- minimiser une norme du vecteur différence de prévision $\|\Delta\underline{x}\|$ ; et
- fournir les coefficients de réflexion $\underline{s}^{[n]}$.

**2.** Procédé d'après la revendication 1, sachant que la minimisation est effectuée au moyen de la norme $L_p$ du vecteur différence de prévision $\|\Delta\underline{x}\|_p$ avec $0 < p \le 2$, sachant que la norme Lq du vecteur des coefficients de réflexion $\|\underline{s}^{[n]}\|_q$ est minimisée, étant sous-entendu que $0 < q \le 1$.

**3.** Procédé d'après la revendication 1, sachant que la minimisation est effectuée au moyen de la norme $L_p$ du vecteur différence de prévision $\|\Delta\underline{x}\|_p$ avec $0 < p \le 2$, sachant que la norme Lq de la variance totale du vecteur des coefficients de réflexion $\|\sigma(\underline{s}^{[n]})\|_q$ est minimisée, étant sous-entendu que $0 < q \le 1$.

**4.** Procédé d'après une des revendications précédentes, sachant que le vecteur des coefficients de réflexion $\underline{s}$ est minimisé de telle manière que $\underline{s}$ est creux, sachant que le nombre k des éléments différents de zéro est susceptible d'être prédéterminé.

**5.** Procédé d'après une des revendications précédentes, sachant que la minimisation de la norme $\|\Delta\underline{x}\|_p$ a lieu itérativement et que la minimisation itérative comprend les étapes suivantes :

- calculer le vecteur différence de prévision $\Delta\underline{x} = \underline{x} - \underline{G}\cdot\underline{s}^{[n]}$ pour la $n^{ième}$ itération ;
- calculer un vecteur de réactualisation (*Aufdatierungsvektor*) $\Delta\underline{s}$ ;
- calculer un nouveau vecteur des coefficients de réflexion $\underline{s}^{[n+1]} = \underline{s}^{[n]} + \Delta\underline{s}$.

**6.** Procédé d'après la revendication 5, sachant que la minimisation itérative de l'écart $\|\Delta x\|_p$ comprend les étapes suivantes :

- transformer le vecteur de réactualisation $\Delta \underline{s}$ en un vecteur de réactualisation creux à 2k (*2k-spärlich*).

**7.** Procédé d'après la revendication 5 ou 6, sachant que la minimisation itérative de l'écart $\|\Delta x\|_p$ comprend les étapes suivantes :

- transformer le nouveau vecteur des coefficients de réflexion $\underline{s}^{[n+1]}$ en un vecteur creux à 2k.

**8.** Procédé d'après une des revendications précédentes, étant précisé que p = 2, de manière que la minimisation de la norme $\|\Delta x\|_p$ a lieu au moyen de la norme $L_2$.

**9.** Procédé d'après une des revendications précédentes, étant précisé que q = 1, de manière que la minimisation de la norme $\|\Delta s\|_q$ a lieu au moyen de la norme $L_1$.

**10.** Procédé d'après une des revendications précédentes, comprenant les étapes suivantes :

- Déterminer T valeurs du signal d'excitation $\underline{a}^{[i]}$, qui est mené au moyen d'émission pendant l'enregistrement de la i<sup>ième</sup> série de mesure ;
- créer M matrices de signal d'excitation $\underline{A}^{[i]}$,
sachant que les éléments matriciels de la première colonne de la i<sup>ième</sup> matrice de signal d'excitation $\underline{A}^{[i]}$ contiennent le signal d'excitation $\underline{a}^{[i]}$,,
sachant que les éléments matriciels de la première rangée de la i<sup>ième</sup> matrice de signal d'excitation $\underline{A}^{[i]}$ sont nuls à part l'élément matriciel $A^{[i]}_{1,1}$ et
sachant que la i<sup>ième</sup> matrice de signal d'excitation $\underline{A}^{[i]}$ est une matrice de Toeplitz ;
- rassembler les M matrices de signal d'excitation $A^{[i]}$ en une matrice de signal d'excitation $\underline{A} = (\underline{A}^{[1]T}, \underline{A}^{[2]T} \ldots \underline{A}^{[M]T})^T$,
- calculer le vecteur différence de prévision $\Delta \underline{x}$ par la règle $\Delta \underline{x} = \underline{x} - \underline{A} \cdot \underline{G} \cdot \underline{s}^{[n]}$.

**11.** Dispositif pour la détermination de la répartition spatiale d'un coefficient de réflexion pour des ondes dans un échantillon (3), comprenant :

- au moins un moyen d'émission (7) pour ondes ;
- au moins un moyen de réception (5) pour ondes ;
- au moins un logement d'échantillon, dans lequel un échantillon (3) peut être logé au moins par endroits de manière que des ondes (9) émises par le ou les moyens d'émission (7) passent à travers l'échantillon (3) au moins par endroits le long de leur course vers le ou les moyens de réception (5) ;
- un moyen d'évaluation (15), qui est raccordé au ou aux moyens d'émission (7) et au ou aux moyens de réception (5), sachant qu'au moyen du moyen d'évaluation (15) on peut effectuer un procédé d'après une des revendications de 1 à 10.

**12.** Produit programme d'ordinateur avec un programme, qui est mémorisé sur un support lisible à la machine, sachant que le programme peut amener le moyen d'évaluation (15) d'un dispositif d'après la revendication 11 à effectuer un procédé d'après une des revendications de 1 à 10.

Fig. 1

3

| S1 | S4 | S7 | R |
| S2 | S5 | S8 |
| S3 | S6 | S9 |
| E |

5

7

Fig. 2

| S1 | S4 | S7 |
| S2 | S5 | S8 |
| S3 | S6 | S9 |
| | R | E |

3

5

7

Fig. 3

$N_i=5$

Fig. 4a

Fig. 4b

$N_i=10$

Fig. 4c

Fig. 4d

$N_i=15$

Fig. 4e

Fig. 4f

**EP 2 539 870 B1**

**IN DER BESCHREIBUNG AUFGEFÜHRTE DOKUMENTE**

**In der Beschreibung aufgeführte Nicht-Patentliteratur**

- 3D regularized speed-map reconstruction in ultrasound transmission tomography. **JIRIK R et al.** ULTRASONICS SYMPOSIUM (IUS). IEEE INTERNATIONAL, 20. September 2009, 2272-2275